# EUROPÄISCHE PATENTSCHRIFT

(11) **EP 1 260 688 B1**
(45) Veröffentlichungstag und Bekanntmachung des Hinweises auf die Patenterteilung: **27.12.2006**
(21) Anmeldenummer: 02007794.7
(22) Anmeldetag: 06.04.2002
(51) Int. Cl.: F02B 67/06

(54) **Riemenspannvorrichtung für eine Brennkraftmaschine**
Belt tensioning device for an internal combustion engine
Tendeur courroie pour un moteur à combustion interne

(30) Priorität: 22.05.2001 DE 10124857
(43) Veröffentlichungstag der Anmeldung: 27.11.2002
(73) Patentinhaber: Bayerische Motoren Werke Aktiengesellschaft, 80809 München (DE)
(72) Erfinder: Wimmer, Rudolf, 4431 Haidershofen (AT); Steindl, Werner, 4810 Gmunden (AT)

(56) Entgegenhaltungen:
- EP-A- 0 482 781
- DE-A- 19 907 668
- DE-U- 9 313 182
- US-A- 4 798 564
- US-A- 5 772 549

## Beschreibung

Die Erfindung betrifft eine Riemenspannvorrichtung für eine Brennkraftmaschine mit einem Armelement, einem an dem Armelement angebrachten, beispielsweise als Laufrolle ausgebildeten Riemendruckelement, einer Lagereinrichtung zur schwenkbewegbaren Lagerung des Armelementes und einer Torsionseinrichtung zur Aufbringung eines Drehmomentes auf das Armelement um das Riemendruckelement gegen den Riemen zu drängen.

Eine derartige Riemenspannvorrichtung ist aus DE 199 07 668 A1 bekannt. Diese Riemenspannvorrichtung ist in unmittelbarer Nähe eines zum Antrieb eines Zusatzaggregates vorgesehenen Riemenelementes an einem Steuergehäusedeckel einer Brennkraftmaschine angebracht.

Die Befestigung dieser herkömmlichen Riemenspannvorrichtung an dem Steuerghäusedeckel erfolgt hierbei durch in dem Steuergehäusedeckel verankerte Schrauben.

Der Erfindung liegt die Aufgabe zugrunde, eine Riemenspannvorrichtung für eine Brennkraftmaschine zu schaffen, die sich gegenüber der vorangehend beschriebenen Riemenspannvorrichtung unter fertigungs- und montagetechnischen Gesichtspunkten als vorteilhaft erweist und sich durch eine hohe Dauerfestigkeit und Funktionszuverlässigkeit auszeichnet.

Diese Aufgabe wird erfindungsgemäß gelöst durch eine Riemenspannvorrichtung für eine Brennkraftmaschine mit einem Armelement, einem an dem Armelement angebrachten, beispielsweise als Laufrolle ausgebildeten Druckelement, einer Lagereinrichtung zur schwenkbewegbaren Lagerung des Armelementes und einer Torsionseinrichtung zur Aufbringung eines Drehmomentes auf das Armelement, wobei die Lagereinrichtung und die Spanneinrichtung in einem Topfgehäuse aufgenommen sind und das Topfgehäuse in eine Aufnahmeöffnung eingesetzt ist, die in einer Kettenkastenwand ausgebildet ist.

Dadurch wird es auf vorteilhafte Weise möglich, eine Riemenspannvorrichtung zu schaffen, die unter geringem Bauraumbedarf durch eine hochfeste Verschraubung an einem Motorblock fixierbar ist. Als besonders vorteilhafter Nebeneffekt wird hierbei eine hochbelastbare Fixierung der Kettenkastenwand an dem Motorblock sowie eine wirkungsvolle Dämpfung der Kettenkastenwand und hierbei eine verminderte Körperschallausbreitung erreicht. Aufgrund der durch die erfindungsgemäße Ausgestaltung der Riemenspannvorrichtung erreichte Verminderung der strukturmechanischen Belastung der Kettenkastenwand, kann letztere dünnwandiger und gegebenenfalls auch aus einem Kunststoffmaterial gefertigt werden. Hierdurch ergibt sich neben einem verminderten Materialverbrauch auch ein verringertes Gesamtgewicht einer entsprechenden Brennkraftmaschine.

Eine gemäß einem besonderen Aspekt der vorliegenden Erfindung bevorzugte Ausführungsform ist dadurch gegeben, dass das Topfgehäuse mit einer Abdichtungseinrichtung versehen ist, zur Abdichtung der Aufnahmeöffnung. Hierdurch wird es möglich, die zur Aufnahme des Topfgehäuses vorgesehene Aufnahmeöffnung, durch die Riemenspannvorrichtung selbst, in abdichtender Weise zu verschließen.

Das Topfgehäuse weist in vorteilhafter Weise einen Bodenabschnitt auf der auf einer Motorblockstirnwand aufsitzt. Hierdurch wird es möglich, das Topfgehäuse fest sitzend an der Motorblockstirnwand zu fixieren. Diese Fixierung wird in vorteilhafter Weise durch einen Schraubenzapfen erreicht, der durch das Topfgehäuse hindurch in den Motorblock eingeschraubt ist.

Eine unter fertigungstechnischen Gesichtspunkten besonders vorteilhafte Ausführungsform der Erfindung ist dadurch gegeben, dass das Topfgehäuse eine zylindrische Außenumfangsfläche aufweist. Eine derartige Außenumfangsfläche kann mit hoher Oberflächenqualität durch einen spanabhebenden Nachbearbeitungsvorgang an dem Topfgehäuse ausgebildet werden. Auch die zur Aufnahme des Topfgehäuses vorgesehene, in der Kettenkastenwand ausgebildete Aufnahmeöffnung kann hierbei unter fertigungstechnischen Gesichtspunkten in vorteilhafter Weise spanabhebend nachgearbeitet werden.

Gemäß einer besonders bevorzugten Ausführungsform der Erfindung umfaßt das Topfgehäuse einen Umfangsflanschabschnitt in welchem eine Dichtungseinrichtung aufgenommen ist. Diese Dichtungseinrichtung umfaßt vorzugsweise eine, in dem Umfangsflanschabschitt, ausgebildete Umfangsnut sowie einen darin aufgenommenen Dichtring insbesondere O-Ring. Es ist möglich, die topfgehäuseseitig vorgesehene Dichtungseinrichtung sowie die hiermit in Kontakt tretenden, komplementär an der Kettenkastenwand ausgebildeten Bereiche derart auszubilden, dass eine vorgegebene, auf den Dichtring wirkende Kraft weitgehend unabhängig von dem Anzugsmoment des vorangehend genannten Schraubenelementes erreicht wird.

Der Umfangsflanschabschnitt ist vorzugsweise derart ausgebildet, dass dieser auf der Kettenkastenwand aufsitzt, wobei der Axialabstand des Umfangsflanschabschnittes von dem Bodenabschnitt des Topfgehäuses derart bemessen ist, dass das Topfgehäuse in Montageposition eine vorgegebene Axialkraft auf die Kettenkastenwand aufbringt.

In dem Topfgehäuse ist gemäß einer besonders bevorzugten Ausführungsform der Erfindung ein Drehzapfenabschnitt ausgebildet. Dieser Drehzapfenabschnitt ist vorzugsweise einstückig mit dem Bodenabschnitt des Topfgehäuses ausgebildet. Hierdurch ergibt sich, aufgrund der durch den Bodenabschnitt erreichten großflächigen Abstützung des Drehzapfenabschnittes, bereits bei vergleichsweise geringen Montagekräften, ein hohes Querkraftaufnahmevermögen des Drehzapfenabschnittes. Es ist jedoch auch möglich, das Armelement an einer Innenumfangsfläche des Topfgehäuses drehbewegbar zu lagern. Hierbei ergeben sich vergleichsweise geringe Flächenpressungen.

Gemäß einer besonders bevorzugten Ausführungsform der Erfindung ist in einem Zwischenbereich zwischen einer Innenumfangsfläche des Topfgehäuses und des Drehzapfenabschnittes eine Torsions-Dämpfungseinrichtung vorgesehen. Diese Torsions-Dämpfungseinrichtung umfaßt vorzugsweise Reibelemente, die unter einer vorbestimmten Andruckkraft miteinander in Reibkontakt stehen. Diese Reibelemente können kegelförmig verlaufende Reibflächen bilden. Die Druckkraft kann durch ein Federelement aufgebracht werden, das vorzugsweise zugleich zur Aufbringung eines Torsionsmomentes auf das Armelement vorgesehen ist.

Das Schraubenelement zur Fixierung des Topfgehäuses an dem Motorblock weist vorzugsweise einen Kopfabschnitt auf, der in Montageposition auf dem Drehzapfenabschnitt aufsitzt und von einem außerhalb der Kettenkastenwand liegenden Bereich aus zugänglich ist.

Das Topfgehäuse ist vorzugsweise aus einem Metallwerkstoff gefertigt und weist einen Außendurchmesser im Bereich von 50 bis 120 Millimetern auf. Die axiale Länge des Topfgehäuseelementes liegt vorzugsweise im Bereich von 15 bis 75 mm. Hierbei können vergleichsweise große Spalträume zwischen der Kettenkastenwand und dem Motorblock durch das Topfgehäuse überbrückt werden.

Weitere Einzelheiten ergeben sich aus der nachfolgenden Beschreibung eines bevorzugten Ausführungsbeispieles der Erfindung in Verbindung mit der Zeichnung. Es zeigt:
- **Fig. 1**: eine perspektivische Detailansicht der Riemenspannvorrichtung in Einbauposition mit einer teilweise aufgebrochen dargestellten Kettenkastenwand;
- **Fig.2**: eine Axialschnittansicht zur näheren Erläuterung der Einbauverhältnisse beim Einsatz der erfindungsgemäßen Riemenspannvorrichtung;
- **Fig. 3**: eine perspektivische Ansicht des Riemenspanners mit Blick auf den Bodenabschnitt des Topfgehäuses;
- **Fig. 4**: eine vereinfachte Draufsicht, auf einen stirnseitig an einer Brennkraftmaschine vorgesehenen Riementrieb, bei welchem die Riemenspannung durch den erfindungsgemäßen Riemenspanner aufgebracht wird;
- **Fig. 5**: eine Draufsicht auf einen weiteren Riementrieb ebenfalls mit einem erfindungsgemäßen Riemenspanner jedoch mit zusätzlichen Nebenaggregaten;

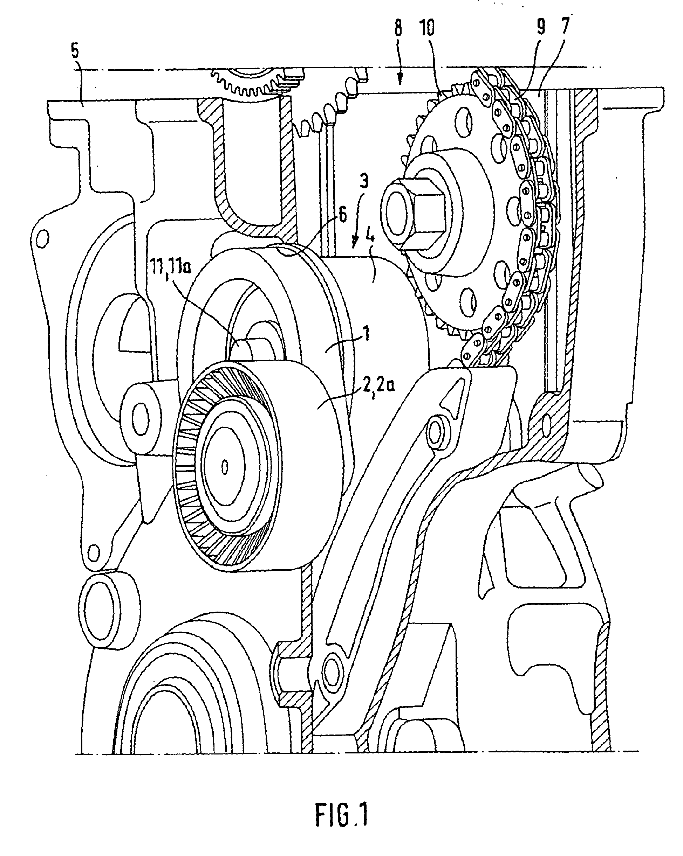

Figur 1 zeigt in Form einer perspektivischen Detailansicht eine erfindungsgemäße Riemenspannvorrichtung in Einbauposition. Die Riemenspannvorrichtung umfaßt ein Armelement 1, ein an dem Armelement 1 angebrachtes Riemendruckelement 2, das hier als Laufrolle ausgebildet ist, sowie eine Lagereinrichtung 3 zur schwenkbewegbaren Lagerung des Armelementes 1.

Die Lagereinrichtung 3 umfaßt ein Topfgehäuse 4 das durch eine, in einer Kettenkastenwand 5 ausgebildete Aufnahmeöffnung 6 auf eine, der Kettenkastenwand 6 zugewandte Stirnseite eines Motorblocks 7, aufgeschraubt ist.

Der Motorblock 7 begrenzt gemeinsam mit der Kettenkastenwand 5, einen Kettenkasten 8, in welchem eine Steuerkette 9, sowie mehrere Steuerkettenräder 10 aufgenommen sind. Die in Achsrichtung der Steuerkettenräder 10 gemessene axiale Tiefe des Kettenkastens 8 beträgt bei dieser Ausführungsform ca. 45 mm.

Das Topfgehäuse 4 ist über eine zentrale Schraube 11 an dem Motorblock 7 fixiert. Diese zentrale Schraube 11 weist einen Schraubenkopf 11a auf, der in einer in dem Armelement 1 gebildeten Ausnehmung 12, versenkt angeordnet ist.

Der Abstand einer Rotationsachse, des als Laufrolle 2a ausgebildeten Riemendruckelementes 2, von einer Zentralachse der zentralen Schraube 11, sowie der Außendurchmesser der Laufrolle sind derart aufeinander abgestimmt, dass der Schraubenkopf 11a für die Montage des Topfgehäuses 4 noch ausreichend zugänglich ist. Das als Laufrolle 2a ausgebildete Riemendruckelement 2 ist bei dieser Ausführungsform aus einem Kunststoffmaterial gefertigt und über eine dauergeschmierte Lagereinrichtung drehbewegbar an dem Armelement 1 gelagert. Bei der hier dargestellten Ausführungsform weist die Laufrolle 2a eine zylindrische, nicht profilierte Außenumfangsfläche auf, die auf einer Rückseite eines Riemens abrollt. Es ist auch möglich, die Außenumfangsfläche der Laufrolle 2a komplementär zur Anlagefläche des Riemenelementes profiliert auszubilden.

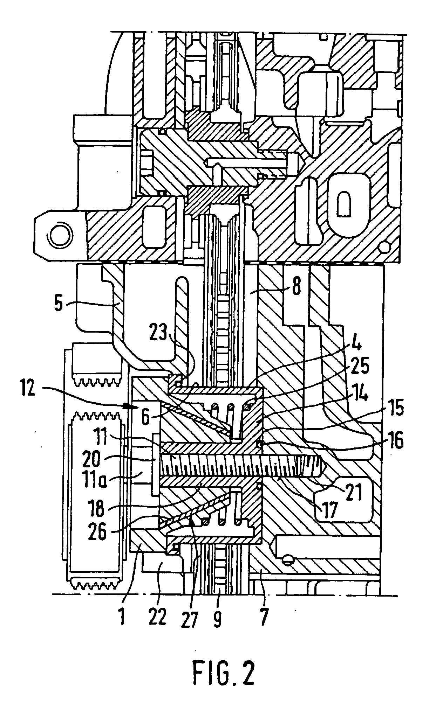

Wie aus Figur 2 hervorgeht, umfaßt das Topfgehäuse 4 einen Bodenabschnitt 14 der auf einer spanabhebend nachbearbeiteten Fläche des Motorblocks 7 aufsitzt. Im Bereich des Bodenabschnitts 14 ist in einer Ringnut 15 ein O-Ring 16 aufgenommen, durch welchen eine zentrale Schraubenaufnahmebohrung 17 gegenüber dem Kettenkasteninnenraum 8, abgedichtet ist.

Die zentrale Schraubenaufnahmebohrung 17 verläuft in einem zentralen Lagerzapfen 18 auf welchem in schwenkbewegbarer Weise das Armelement 1 schwenkbewegbar gelagert ist.

Der zentrale Lagerzapfen 18 ist einstückig mit dem Bodenabschnitt 14 ausgebildet. An einem, dem Bodenabschnitt 14 abgewandten Endabschnitt des Lagerzapfens 18 ist eine Sitzfläche 19 ausgebildet, auf welcher der Schraubenkopf 11a der Zentralschraube 11 unter Zwischenlage einer Scheibe 20, aufsitzt. Die zentrale Schraube 11 ist über eine Sacklochgewindebohrung 21 in dem Motorblock 7 lösbar verankert.

An dem Topfgehäuse 4 ist ein Umfangsflanschabschnitt 22 ausgebildet, der auf einer ringförmig, um die Aufnahmeöffnung 6 herumlaufenden Sitzfläche 23 in abdichtender Weise aufsitzt. In dem, der Sitzfläche 23 benachbarten Bereich des Umfangsflanschabschnittes 22 ist eine Ringnut ausgebildet, in welcher eine Dichteinrichtung aufgenommen ist. Durch diese Dichteinrichtung wird die Aufnahmeöffnung 6 im Zusammenspiel mit dem Topfgehäuse 4 gegenüber der Umgebung abgedichtet. Es ist möglich, durch diese Dichteinrichtung einen direkten metallischen Kontakt zwischen dem Topfgehäuse 4 und der Kettenkastenwand 5 zu vermeiden. Der, in axialer Richtung der zentralen Schraube 11 gemessene Abstand des Umfangsflanschabschnittes 22 von dem Bodenabschnitt 14, ist derart gewählt, dass in Einbauposition die Kettenkastenwand 5 mit einer vorgegebenen Axialkraft zu dem Motorblock 7 hin gedrängt wird. Hierbei wirkt das Topfgehäuse 4 als Befestigungselement der Kettenkastenwand 5. Im Hinblick darauf, dass der zentrale Lagerzapfen 18 einstückig mit dem Bodenabschnitt 14 ausgebildet ist und dieser Bodenabschnitt 14 wiederum auf dem Motorblock sitzt, können etwaige auf das Armelement 1 oder das Topfgehäuse 4 wirkende Querkräfte in den Motorblock 7 eingeleitet werden, ohne hierbei die Kettenkastenwand 5 zu belasten. Die Kettenkastenwand 5 kann daher gegenüber üblichen Konstruktionen vergleichsweise dünnwandig ausgebildet werden.

Im Innenbereich des Topfgehäuses ist eine Torsionsfedereinrichtung 25 aufgenommen zur Erzeugung, eines die Laufrolle 2a über das Armelement 1 gegen einen Riemen drängenden Drehmomentes.

Weiterhin ist im Innenbereich des Topfgehäuses 4 eine Dämpfungseinrichtung 26 vorgesehen zur Dämpfung etwaiger Schwenkbewegungen des Armelementes 1.

Die Dämpfungseinrichtung 26 umfaßt eine Reibflächenanordnung 27 wobei die Reibflächen diese Reibflächenanordnung 27 bei dem dargestellten Ausführungsbeispiel kegelförmig ausgebildet sind.

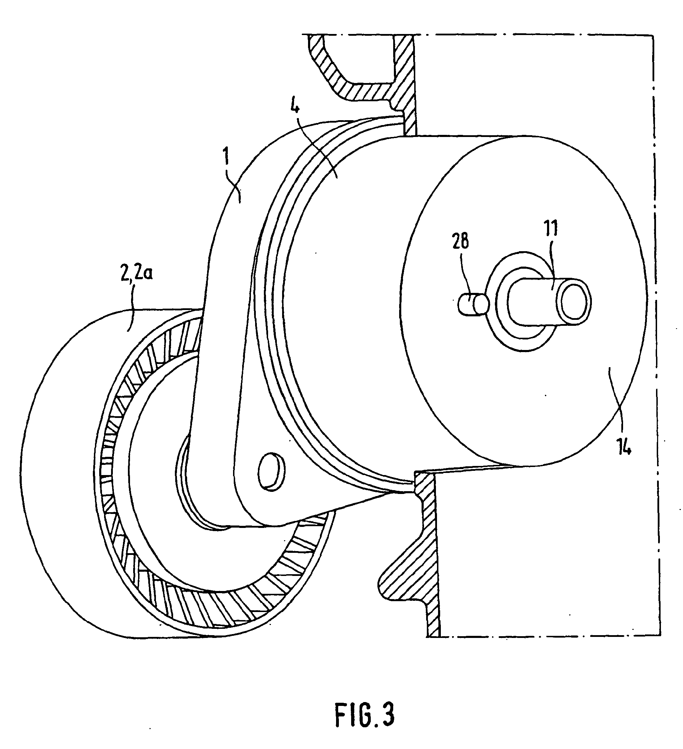

Fig.3 zeigt in Form einer perspektivischen Darstellung eine Ansicht der vorangehend beschrieben Riemenspannvorrichtung mit Blick auf deren Bodenabschnitt 14. Erkennbar ist in dieser Darstellung der Bodenabschnitt 14 des Topfgehäuses 4 aus welchem der zur Verankerung im Motorblock (Fig.2; Bezugszeichen 7) vorgesehene Gewindeabschnitt der zentralen Schraube 11 hervorsteht. Die zur Aufnahme der zentralen Schraube 11 vorgesehene Bohrung ist von dem in der Ringnut 15 aufgenommenen O-Ring umgeben. Zur Schaffung einer Verdrehsicherung des Topfgehäuses 4 ist ein Fixierelement 28 vorgesehen, das hier als radial von der zentralen Schraube 11 beabstandeter Passstift ausgebildet ist. Dieser Passstift ist in Einbauposition der Riemenspannvorrichtung in einer motorblockseitig ausgebildeten Aufnahmebohrung aufgenommen.

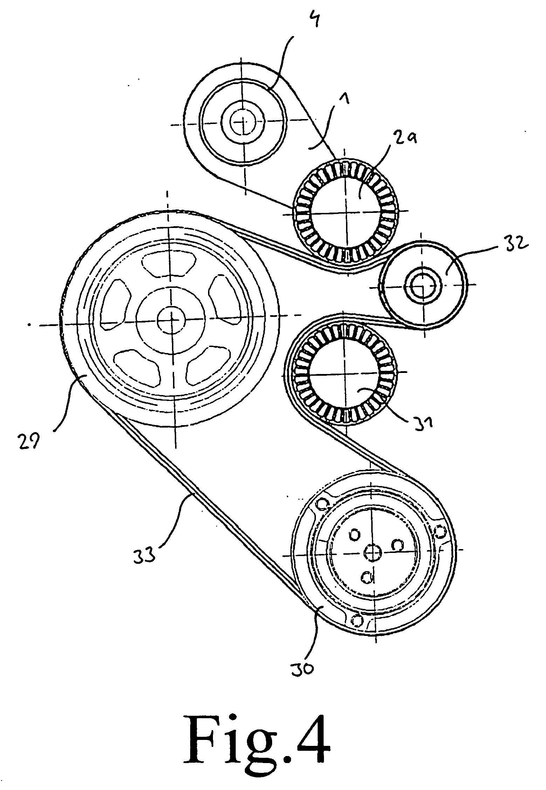

In Fig.4 ist in Form einer Schemadarstellung ein Riementrieb dargestellt, bei welchem die Spannung des Riemens durch die vorangehend beschriebene Riemenspannvorrichtung erreicht wird. Der Riementrieb umfaßt ein, durch eine Kurbelwelle einer Brennkraftmaschine angetriebenes Kurbelwellenrad 29, ein Nebenaggregatsrad 30, eine Umlenkrolle 31, ein weiteres Nebenaggregatsrad 32, sowie die an dem schwenkbewegbaren gelagerten Armelement 1 befestigte Laufrolle 2a. Bei dem hier verwendeten Riemenelement handelt es sich um einen Flachkeilriemen 33 mit einer profilierten Innenfläche und einer weitgehend glatten Außenfläche. Die Riemenspannvorrichtung ist derart angeordnet, dass sich deren Topfgehäuse 4 in einem Zwischenbereich zwischen einer Kurbelwelle und einem Zylinderkopf befindet. Aufgrund der flachen Bauform der erfindungsgemäßen Riemenspannvorrichtung ist es möglich, dass Topfgehäuse 4 derart anzuordnen, dass dieses von einem der Räder des Riementriebs teilweise überdeckt wird.

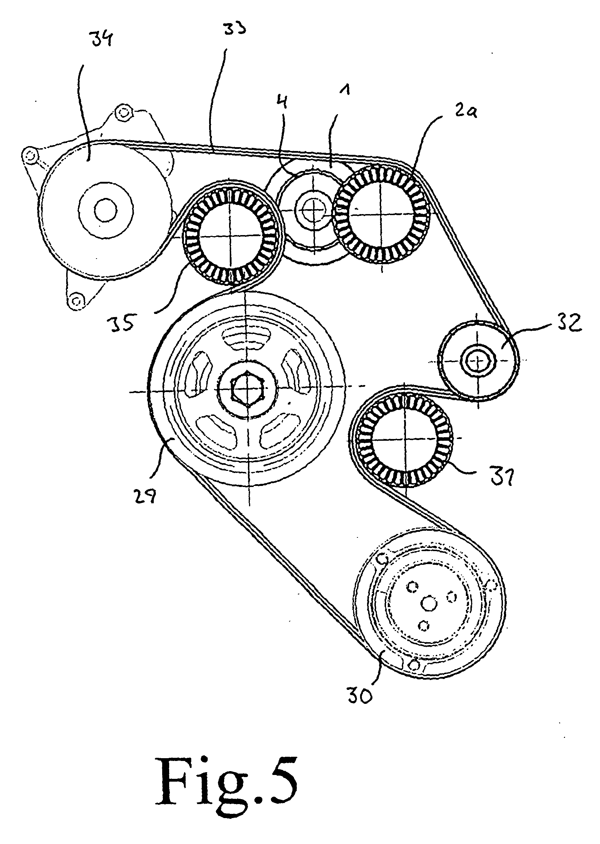

In Fig. 5 ist eine weitere Variante eines Riementriebes dargestellt, bei welchem ebenfalls die erfindungsgemäße Riemenspannvorrichtung zum Einsatz kommt. Der hier dargestellte Riementrieb umfaßt wiederum das Kurbelwellenrad 29, das erste Nebenaggregatsrad 30, die Umlenkrolle31 ein weiteres Nebenaggregatsrad 32, die Laufrolle 2a der Riemenspannvorrichtung, ein Wasserpumpenrad 34 sowie eine weitere Umlenkrolle 35. Das Armelement 1 sowie das darunterliegend vorgesehene Topfgehäuse 4 sind derart angeordnet, dass sich diese unter einer Laufebene des Riemenelementes 33 befinden.

Die Laufrolle 2a weist eine Komplementär zur Innenfläche des Riemenelementes 33 profilierte Außenumfangsfläche auf.

Die Erfindung ist nicht auf die vorangehend beschriebenen Ausführungsbeispiele beschränkt. Der erfindungsgemäße, ein versenkbar angeordnetes und an einem Motorblock fixierbares Topfgehäuse aufweisende Mechanismus kann auch mit einem Kettenrad versehen sein, zur Aufbringung einer Kettenspannkraft.

## Patentansprüche

1. Riemenspännvorrichtung für eine Brennkraftmaschine mit: einem Armelement (1), einem an dem Armelement (1) angebrachten Druckelement (2), einer Lagereinrichtung zur schwenkbewegbaren Lagerung des Armelementes (1), und einer Torsionseinrichtung zur Aufbringung eines Drehmomentes auf das Armelement (1), **dadurch gekennzeichnet, dass** die Lagereinrichtung und die Torsionseinrichtung in einem Topfgehäuse (4) aufgenommen sind und dass das Topfgehäuse (4) in eine Aufnahmeöffnung (6) eingesetzt ist, die in einer Kettenkastenwand (5) ausgebildet ist.

2. Riemenspannvorrichtung nach Anspruch 1, **dadurch gekennzeichnet, dass** das Topfgehäuse (4) mit einer Abdichtungseinrichtung versehen ist, zur Abdichtung der Aufnahmeöffnung (6).

3. Riemenspannvorrichtung nach Anspruch 1 oder 2, **dadurch gekennzeichnet, dass** das Topfgehäuse (4) einen Bodenabschnitt (14) aufweist, der in Einbauposition auf einer Motorblockstirnwand aufsitzt.

4. Riemenspannvorrichtung nach wenigstens einem der Ansprüche 1 bis 3, **dadurch gekennzeichnet, dass** das Topfgehäuse (4) in Einbauposition auf die Motorblockstirnwand aufgeschraubt ist.

5. Riemenspannvorrichtung nach Anspruch 4, **dadurch gekennzeichnet, dass** zur Verschraubung des Topfgehäuses (4) mit der Motorblockstirnwand ein Schraubenelement (11) vorgesehen ist, das den Bodenabschnitt (14) durchsetzt.

6. Riemenspannvorrichtung nach wenigstens einem der Ansprüche 1 bis 5, **dadurch gekennzeichnet, dass** das Topfgehäuse (4) eine zylindrische Außenumfangsfläche aufweist.

7. Riemenspannvorrichtung nach wenigstens einem der Ansprüche 1 bis 6, **dadurch gekennzeichnet, dass** das Topfgehäuse (4) einen Umfangsflanschabschnitt (22) aufweist in welchem eine Dichtungseinrichtung aufgenommen ist.

8. Riemenspannvorrichtung nach Anspruch 7, **dadurch gekennzeichnet, dass** der Umfangsflanschabschnitt (22) auf der Kettenkastenwand (5) aufsitzt und der Axialabstand des Umfangsflanschabschnittes (22) von dem Bodenabschnitt (14) derart bemessen ist, dass das Topfgehäuse in Montageposition eine vorgegebene Axialkraft auf die Kettenkastenwand (5) aufbringt.

9. Riemenspannvorrichtung nach wenigstens einem der Ansprüche 1 bis 8, **dadurch gekennzeichnet, dass** die Dichtungseinrichtung, eine, in dem Umfangsflanschabschnitt (22) ausgebildete Umfangsnut, und einen darin aufgenommen O-Ring aufweist.

10. Riemenspannvorrichtung nach wenigstens einem der Ansprüche 1 bis 9, **dadurch gekennzeichnet, dass** in dem Topfgehäuse (4) ein Lagerzapfen (18) ausgebildet ist.

11. Riemenspannvorrichtung nach Anspruch 10, **dadurch gekennzeichnet, dass** der Lagerzapfen (18) integral mit dem Bodenabschnitt (14) des Topfgehäuses (4) ausgebildet ist.

12. Riemenspannvorrichtung nach wenigstens einem der Ansprüche 1 bis 11, **dadurch gekennzeichnet, dass** in einem Zwischenbereich, zwischen einer Innenumfangsfläche des Topfgehäuses (4) und dem Lagerzapfen (18), eine Torsionsdämpfungseinrichtung ausgebildet ist.

13. Riemenspannvorrichtung nach wenigstens einem der Ansprüche 1 bis 12, **dadurch gekennzeichnet, dass** in dem Topfgehäuse (4) ein Federelement (25) aufgenommen ist, zur Aufbringung eines Torsionsmomentes auf das Armelement (1).

14. Riemenspannvorrichtung nach wenigstens einem der Ansprüche 1 bis 13, **dadurch gekennzeichnet, dass** ein Schraubenelement (11) vorgesehen ist, das einen von außen zugänglichen Kopfabschnitt (11a) aufweist, wobei das Schraubenelement (11) durch das Topfgehäuse (4) hindurchgeführt ist, und in Montageposition der Kopfabschnitt (11a) auf dem Lagerzapfen (18) aufsitzt.

## Claims

1. A belt tensioning device for an internal-combustion engine comprising an arm element (1), a pressure element (2) attached to the arm element (1), a mounting means for mounting the arm element (1) such that it may be moved in a pivoting manner and a torsion means for applying a torque to the arm element (1), **characterised in that** the mounting means and the torsion means are accommodated in a cup-shaped housing (4) and **in that** the cup-shaped housing (4) is inserted into an opening (6) formed in a chain case wall (5).

2. A belt tensioning device according to claim 1, **characterised in that** the cup-shaped housing (4) is provided with a sealing means for sealing the opening (6).

3. A belt tensioning device according to either claim 1 or claim 2, **characterised in that** the cup-shaped housing (4) has a base portion (14) which rests on an engine block end wall in the installation position.

4. A belt tensioning device according to at least one of claims 1 to 3, **characterised in that** in the installation position the cup-shaped housing (4) is screwed to the engine block end wall.

5. A belt tensioning device according to claim 4, **characterised in that** for screwing the cup-shaped housing (4) to the engine block end wall, there is provided a screw element (11) which penetrates the base portion (14).

6. A belt tensioning device according to at least one of claims 1 to 5, **characterised in that** the cup-shaped housing (4) has a cylindrical external circumferential surface.

7. A belt tensioning device according to at least one of claims 1 to 6, **characterised in that** the cup-shaped housing (4) has a circumferential flange portion (22) in which a sealing means is received.

8. A belt tensioning device according to claim 7, **characterised in that** the circumferential flange portion (22) rests on the chain case wall (5) and the axial distance between the circumferential flange portion (22) and the base portion (14) is such that in the assembly position the cup-shaped housing applies a predetermined axial force to the chain case wall (5).

9. A belt tensioning device according to at least one of claims 1 to 8, **characterised in that** the sealing means has a circumferential groove formed in the circumferential flange portion (22) and an O-ring accommodated therein.

10. A belt tensioning device according to at least one of claims 1 to 9, **characterised in that** a journal (18) is provided in the cup-shaped housing (4).

11. A belt tensioning device according to claim 10, **characterised in that** the journal (18) is integral with the base portion (14) of the cup-shaped housing (4).

12. A belt tensioning device according to at least one of claims 1 to 11, **characterised in that** there is provided a torsion damping means in an intermediate region between an internal circumferential surface of the cup-shaped housing (4) and the journal (18).

13. A belt tensioning device according to at least one of claims 1 to 12, **characterised in that** there is accommodated in the cup-shaped housing (4) a spring element (25) for applying a torsional moment to the arm element (1).

14. A belt tensioning device according to at least one of claims 1 to 13, **characterised in that** there is provided a screw element (11) having an externally accessible head portion (11 a), the screw element (11) being guided through the cup-shaped housing (4) and the head portion (11a) resting on the journal (18) in the assembly position.

## Revendications

1. Tendeur de courroie pour un moteur à combustion interne, comportant un élément de bras (1), un élément de pression (2) mis en place sur l'élément de bras (1), un dispositif pour loger l'élément de bras (1) de manière pivotante, ainsi qu'un dispositif servant à exercer un moment de torsion sur l'élément de bras (1),
**caractérisé en ce que**
le dispositif de logement et le dispositif de torsion sont logés dans un boîtier en forme de pot (4) inséré dans une ouverture de réception (6) dans une paroi de carter de chaînes (5).

2. Tendeur de courroie selon la revendication 1,
**caractérisé en ce que**
le boîtier en forme de pot (4) est pourvu d'un dispositif d'étanchéité pour étancher l'ouverture de réception (6).

3. Tendeur de courroie selon la revendication 1 ou 2,
**caractérisé en ce que**
le boîtier en forme de pot (4) comporte une section de fond (14) qui, en position de montage, repose sur une paroi frontale du bloc-cylindres.

4. Tendeur de courroie selon au moins l'une des revendications 1 à 3,
**caractérisé en ce que**
le boîtier en forme de pot (4), en position de montage, est vissé sur la paroi frontale du bloc-cylindres.

5. Tendeur de courroie selon la revendication 4,
**caractérisé en ce que**
pour visser le boîtier en forme de pot (4) sur la paroi frontale de bloc-cylindres, un élément de vis (11) traverse la section de fond (14).

6. Tendeur de courroie selon au moins l'une des revendications 1 à 5,
**caractérisé en ce que**
le boîtier en forme de pot (4) comporte une surface périphérique extérieure cylindrique.

7. Tendeur de courroie selon au moins l'une des revendications 1 à 6,
**caractérisé en ce que**
le boîtier en forme de pot (4) comporte une section de bride périphérique (22) dans laquelle est logé un dispositif d'étanchéité.

8. Tendeur de courroie selon la revendication 7,
**caractérisé en ce que**
la section de bride périphérique (22) repose sur la paroi de carter de chaînes (5) et la distance axiale entre la section de bride périphérique (22) et la section de fond (14) est dimensionnée de telle façon que le boîtier en forme de pot, en position de montage, exerce une force axiale prédéfinie sur la paroi de carter de chaînes (5).

9. Tendeur de courroie selon au moins l'une des revendications 1 à 8,
**caractérisé en ce que**
dans la section de bride périphérique (22) le dispositif d'étanchéité comporte une rainure périphérique, qui loge une bague en O.

10. Tendeur de courroie selon au moins l'une des revendications 1 à 9,
**caractérisé par**
un tourillon (18) dans le boîtier en forme de pot (4).

11. Tendeur de courroie selon la revendication 10,
**caractérisé en ce que**
le tourillon (18) est intégré avec la section de fond (14) du boîtier en forme de pot (4).

12. Tendeur de courroie selon au moins l'une des revendications 1 à 11,
**caractérisé par**
un dispositif d'amortissement de torsion dans une zone intermédiaire entre une surface périphérique intérieure du boîtier de pot (4) et le tourillon (18).

13. Tendeur de courroie selon au moins l'une des revendications 1 à 12,
**caractérisé par**
un élément de ressort (25) logé dans le boîtier en forme de pot (4) en vue d'exercer un moment de torsion sur l'élément de bras (1).

14. Tendeur de courroie selon au moins l'une des revendications 1 à 13,
**caractérisé en ce qu'**
un élément à vis (11) qui comporte une section de tête (11a) accessible de l'extérieur, est guidé à travers le boîtier en forme de pot (4) et, en position de montage, la section de tête (11a) repose sur le tourillon (18).
